# FASCICULE DE BREVET EUROPEEN

(11) **EP 0 438 352 B1**
(45) Date de publication et mention de la délivrance du brevet: **13.07.1994**
(21) Numéro de dépôt: 91400091.4
(22) Date de dépôt: 16.01.1991
(51) Int. Cl.: B29C 33/52, B01J 13/20, B29K 63/00

(54) **Sphérules creuses en matériaux synthétiques, procédé pour leur fabrication, et application**
Kunststoff-Hohlkugeln, Verfahren zu ihrer Herstellung und ihre Verwendung
Hollow spheres manufactured in synthetic materials, manufacturing process and application

(30) Priorité: 17.01.1990 FR 9000484
(43) Date de publication de la demande: 24.07.1991
(73) Titulaire: ATECA RDM, F-82000 Montauban (FR)
(72) Inventeur: Blottiere, Yves, 82000 Montauban (FR); Chapuis, Philippe, 31170 Tournefeuille (FR); Valaud, Mireille, 31770 Colomiers (FR)
(74) Mandataire: Mestre, Jean (FR)

(56) Documents cités:
- EP-A- 0 170 178
- DE-A- 2 459 093
- FR-A- 2 079 170
- FR-A- 2 151 055
- FR-A- 2 521 481
- US-A- 3 840 626

## Description

La présente invention concerne la fabrication de produits intermédiaires et vise, plus particulièrement, l'obtention de sphérules creuses à base de matériaux synthétiques.

L'invention a tout spécialement pour objets un procédé de fabrication de sphérules creuses à base de matériaux synthétiques, des sphérules creuses notamment ainsi obtenues, et l'application de telles sphérules en tant que produits intermédiaires pour la fabrication de produits finis.

Dans divers secteurs d'activité industrielle on a déjà proposé d'enrober des granules ou particules, de préférence en matière synthétique, d'une couche de revêtement. Une application d'une telle technique au secteur des travaux publics pour la confection de ciments ou bétons allégés est, par exemple, exposée dans la demande de brevet français 2 256 119. Dans ce document, on explique comment revêtir des granules en mousse de polystyrène, d'abord d'une couche d'une résine hydrosoluble-puis, ensuite ultérieurement, d'une charge inerte afin d'obtenir des granules plus ou moins revêtus que l'on peut incorporer à des ciments ou béton à la place du sable ou des gravillons traditionnels afin d'obtenir un matériau de construction de densité moindre. Comme on peut l'observer immédiatement, dans un tel cas les granules enrobés ainsi obtenus sont pleins.

Un autre état de la technique est illustré par le document FR-A-2 151 055.

Selon ce document, on fabrique notamment des corps creux légers par exemple sphériques à usage de charges pour des ciments ou des réfractaires de fours en déposant sur des noyaux dégradables un revêtement par moulage, immersion ou pulvérisation.

On trouve aussi dans le commerce une grande variété de billes ou analogues, sphéroïdales faites en matières synthétiques et qui sont soit pleines, soit creuses et, éventuellement, enrobées mais ces billes, souvent fabriquées par moulage par compression ou injection, présentent une trace de leur technique d'obtention, par exemple sous forme d'une ligne ou d'un bourrelet au droit du plan de joint ou sous forme d'un pédoncule à l'aplomb du canal d'injection. Une telle trace source de discontinuité et de non régularité est, le plus souvent, un inconvénient rédhibitoire.

L'invention vise l'obtention de sphérules creuses à l'aide de matières synthétiques qui ne présentent pas ce type d'inconvénient.

L'invention a pour objet un procédé de fabrication de sphérules creuses à base de matière synthétique à l'aide de noyaux consomptibles dégradables selon ce qui est exposé dans la revendication 1 qui tient compte des enseignements du document FR-A-2 151 055.

L'invention vise aussi l'application de telles sphérules creuses.

D'autres caractéristiques de l'invention apparaîtront à la lecture de la description et des revendications qui suivent ainsi qu'à l'examen du dessin annexé, donné seulement à titre d'exemple où:
- la Figure 1 est un diagramme schématique illustrant la mise en oeuvre du procédé selon l'invention,
- la Figure 2 est un diagramme schématique similaire concernant une mise en oeuvre des sphérules creuses obtenues selon l'invention;
- la Figure 3 est un graphique illustrant le comportement mécanique de sphérules selon l'invention obtenues selon deux variantes où en abscisses est portée la masse volumique en g/cm³ et en ordonnées, à gauche la charge à rupture et à droite la déformation relative, et
- la Figure 4 est un graphique analogue à celui de la Figure 3 d'une autre variante.

Les techniques de manipulation de particules libres, distinctes, par exemple par mélange, malaxage, séchage, étuvage sont bien connues dans la technique. C'est pourquoi on ne s'y étendra pas longuement. Le spécialiste du secteur technique considéré puisera dans les solutions courantes classiques à sa disposition pour faire face aux problèmes particuliers auxquels il est confronté.

Comme on le voit pour obtenir des sphérules 10 creuses en matériau synthétique selon l'invention, on part de noyaux 11 consomptibles dégradables, de préférence thermodégradables qui, par exemple, se rétractent sous l'action de la chaleur.

Les noyaux 11 sont enduits d'une composition d'enduction 20 afin d'obtenir des billes 12 enduites d'une pelllicule de substratum 2.

La composition 20 comprend un solvant 21, de préférence aqueux, et une résine hydrosoluble 22 auxquels est ajouté un addenda 23 anti-agglomérant et, éventuellement, qui favorise ou améliore l'"accrochage" pour les raisons que l'on comprendra par la suite.

La composition d'enduction 20, préparée par toute technique appropriée, une fois obtenue et homogènisée, est ajoutée aux noyaux 11 dans un mélangeur 100. Après brassage, les noyaux passent dans un séchoir 200. A la sortie du séchoir, on obtient des billes 12 enduites d'une pellicule de substratum 2 de la composition d'enduction 20.

Les billes 12 sont alors enduites avec une substance de revêtement 30 de manière à obtenir des boulettes 13 portant d'une couche de revêtement 3.

La substance de revêtement 30 comprend un produit de base 31, telle une résine, auquel on ajoute un produit auxiliaire 32, tel un durcisseur. Produit de base 31 et produit auxiliaire 32 sont malaxés ensemble et, éventuellement, chauffés de manière à obtenir la fluidité nécessaire. On utilise pour cela un malaxeur 301 et un réchauffeur 302 de tout type approprié.

Les billes 12 ainsi que les produit de base 31, produit auxiliaire 32 sont alors introduits dans un mélangeur 300 puis on leur ajoute un adjuvant 33, de préférence, pulvérulent qui sert d'anti-agglutinant. Après une durée déterminée, le contenu du mélangeur est envoyé dans un séchoir 400 pour obtenir des boulettes 13 enduites d'une couche de revêtement 3.

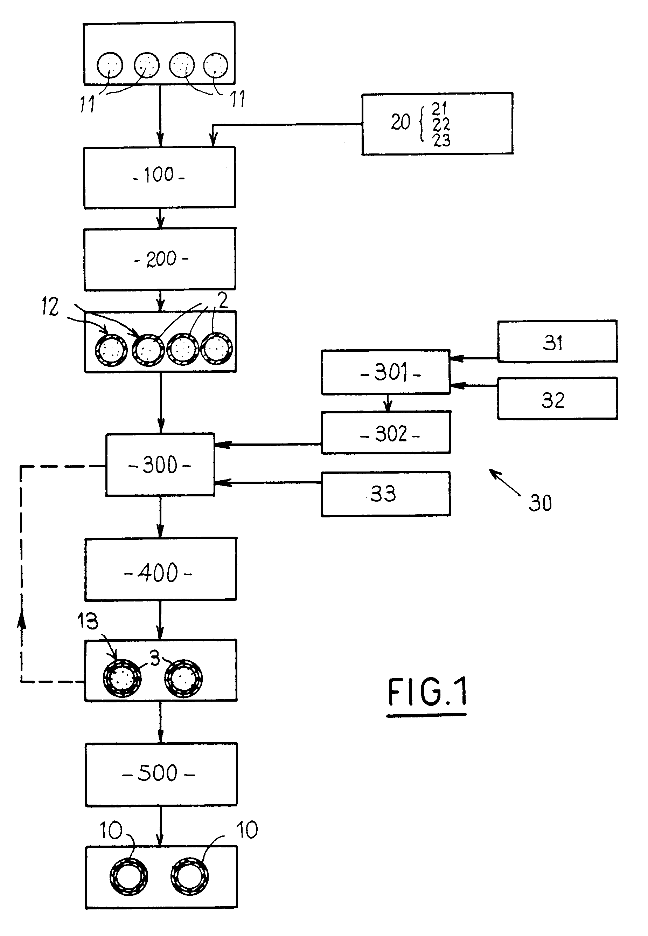

Suivant l'épaisseur de la couche de revêtement 3 à obtenir, les boulettes sortant du séchoir 400 sont soit renvoyées au mélangeur 300 pour être de nouveau brassées avec la substance de revêtement 30 comme indiqué en trait discontinu sur la Fig.1 ou bien envoyées dans une étuve 500.

Après un séjour de durée déterminée et à température convenablement choisie, le contenu de l'étuve 500 est extrait et l'on recueille des sphérules creuses 10 selon l'invention. En effet, les conditions du séjour dans l'étuve 500 des boulettes 13 sont choisies pour obtenir notamment la dégradation des noyaux 11 originels. Ces conditions de séjour peuvent aussi être choisies de manière à conférer aux sphérules des propriétés, par exemple mécaniques, particulières et recherchées.

La composition d'enduction 20 a pour rôles, entre autres, de favoriser "l'accrochage" de la substance de revêtement 30 sur le noyau 11 grâce au substratum 2 obtenu au cas où cette substance n'aurait pas une aptitude spontanée à une fixation correcte.

Les addenda 23 et adjuvant 33 ont pour rôle de s'opposer à la prise en masse ou à la formation de grumeaux ou similaires résultant du collage, de l'adhérence des noyaux, billes et boulettes s'ils présentaient une telle aptitude. De la sorte, les sphérules obtenues sont libres et sont distinctes de manière à pouvoir s'écouler d'une manière similaire à celle d'un Fluide ou de sable ou gravillon sec de même granulométrie ou analogues.

Selon un mode de mise en oeuvre du procédé conforme à l'invention, on utilise des noyaux en polystyrène expansé de l'ordre de 5,4 mm de diamètre. La composition d'enduction 20 est faite d'eau et d'une résine vinylique chargée d'un addenda pulvérulent inerte telle que de la dolomie, du talc. Par exemple, on se sert d'une colle qui porte la désignation commerciale MUROCOL produite par la Société CLIMATDECOR. Il est clair que l'on peut utiliser tout type de colle ou résine compatible avec les noyaux particuliers utilisés dans la mesure où celle-ci ne provoque pas d'agglomération. Dans ce mode de mise en oeuvre, on utilise une substance de revêtement 30 composée d'un produit de base 31 fait d'une résine époxyde et d'un produit auxiliaire 32 qui est son durcisseur. On se sert, par exemple, de la résine qui porte la référence commerciale LY 5052 et son durcisseur HY 5052 sur le catalogue de la Société CIBA GEIGY. L'adjuvant 33 est un polyamide 12 qui porte l'appellation VESTOSINT chez le fabricant HULS. Il est clair que l'on peut utiliser d'autres adjuvants pulvérulents telles que des poudres thermoplastiques, thermodurcissables, des élastomères, des poudres minérales ou métalliques dont les grains sont mouillés par le produit de base et son produit auxiliaire.

Pour exécuter le protocole du procédé selon l'invention, on opère à l'aide des équipements utilisés comme indiqué par la suite.

Le mélange des noyaux 11 avec la composition d'enduction 20 est fait, par exemple, dans le mélangeur 100 à tonneau tournant dont le volume est d'environ cinq fois le volume de la quantité de noyaux utilisés. Le mélangeur à tonneau tourne pendant 10 min. environ à la vitesse de 25 t/min et on lui ajoute la composition d'enduction à raison de 25 g/l de noyaux.

Lorsque le mélange des noyaux et de la composition d'enduction a la qualité requise, on fait passer le contenu du mélangeur 100 dans un séchoir 200 à flux d'air chaud dont le débit est d'environ 500 1/min. d'air à la température de 60°C. Après une durée de 5 min. environ, on obtient des billes 12 enduites d'une pellicule de substratum 2.

Par ailleurs, on prépare la substance de revêtement 30 en mélangeant le produit de base 31, c'est-à-dire la résine époxyde en question, avec le produit auxiliaire 32, c'est-à-dire son durcisseur à raison de cent parties en masse de la résine et de trente huit parties en masse du durcisseur que l'on malaxe pendant 2 min. environ dans le malaxeur 301 jusqu'à parfaite homogénéité, puis que l'on chauffe dans le réchauffeur 302 à environ 40°C pendant 10 min. environ pour abaisser sa viscosité. Cette substance de revêtement 30 et les billes 12 sont placées dans le mélangeur 300 où elles sont malaxées pendant une dizaine de minutes avant qu'on leur ajoute l'adjuvant 33 à raison de 45 g/l de noyaux. Après brassage uniforme pendant 20 min. environ, on fait passer le contenu du mélangeur 300 dans le séchoir 400 où il séjourne pendant une durée de 120 min. environ afin d'accélérer le durcissement de la résine.

A la sortie du séchoir 400, on récupère des boulettes 13 distinctes, bien individualisées, enduites d'une couche de revêtement 3 de l'ordre de 150 microns de polymère. Si nécessaire, à ce stade du processus, si l'on souhaite obtenir une couche de revêtement 3 plus épaisse, on renvoie les boulettes 13 dans le mélangeur 300.

A leur sortie du séchoir 400, les boulettes 13 sont alors envoyées dans une étuve 500 à tonneau qui tourne à la vitesse de 5t/min. environ et où se développe une chaleur tournante comprise entre 80 et 185°C environ. Après un séjour d'une durée de 30 min, on recueille à la sortie de l'étuve 500 des sphérules 10 creuses. En effet, sous l'action de la quantité de chaleur recueillie, les noyaux consomptibles 11 des boulettes 13 se sont rétractés et sont passés d'un diamètre initial de 5,4 mm à 0,2 mm environ. Ces noyaux peuvent aussi totalement disparaître par exemple par sublimation.

Comme indiqué précédemment, en faisant passer plusieurs fois des boulettes 13 dans le mélangeur 300, on peut obtenir des sphérules dont la couche de revêtement présente l'épaisseur recherchée.

En examinant des sphérules creuses faites selon le procédé décrit, on observe qu'on a pu obtenir des sphérules d'un diamètre extérieur de 6,2 mm environ, d'une masse volumique de 0,40 g/cm³, de densité de sphérules en vrac de 0,26 et qui présentent une charge à la rupture en compression uniaxiale de 20 daN et une déformation avant rupture de 30%.

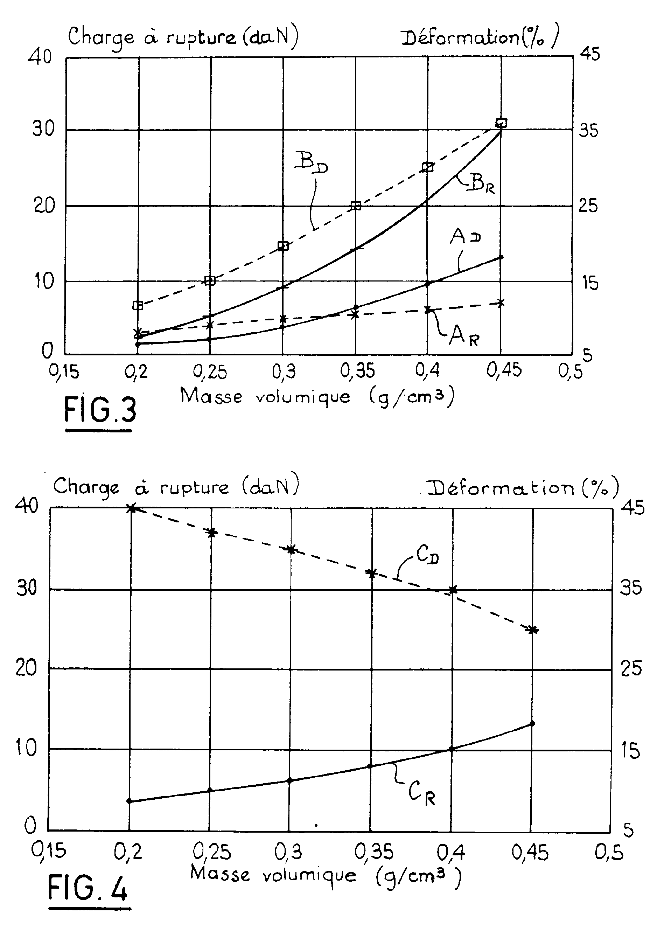

Le graphe de la Figure 3 illustre les variations de la charge à la rupture et de la déformation avant rupture en fonction de la masse volumique des sphérules. Les courbes représentent le comportement de sphérules à base de résine époxy LY 5052 et de son durcisseur HY 5052 et de poudre polyamide 12 VESTOSINT. La lettre A correspond à un durcissement obtenu à 20°C au bout de sept jours et la lettre B correspond à un durcissement obtenu à 185°C au bout de trente minutes. L'indice R désigne la rupture et l'indice D désigne la déformation.

Le graphe de la Figure 4 représente les caractéristiques C de sphérules à base de la même résine que précédemment et pour lesquelles l'adjuvant anti-agglutinant est une poudre de polyéthylène dénommée ESLOR EX sur le catalogue du fabricant EXXON, et les indices ont la même signification.

La fabrication de produits ou objets finis à partir des sphérules creuses selon l'invention qui constituent un produit intermédiaire, est commode. En effet, de par la "fluidité" des sphérules, celles-ci peuvent être placées aisément dans un moule M approprié du fait de leur écoulement facile et ensuite fixées, collées les unes aux autres à l'aide d'une colle, résine ou analogue appropriée pour obtenir l'objet de la configuration recherchée.

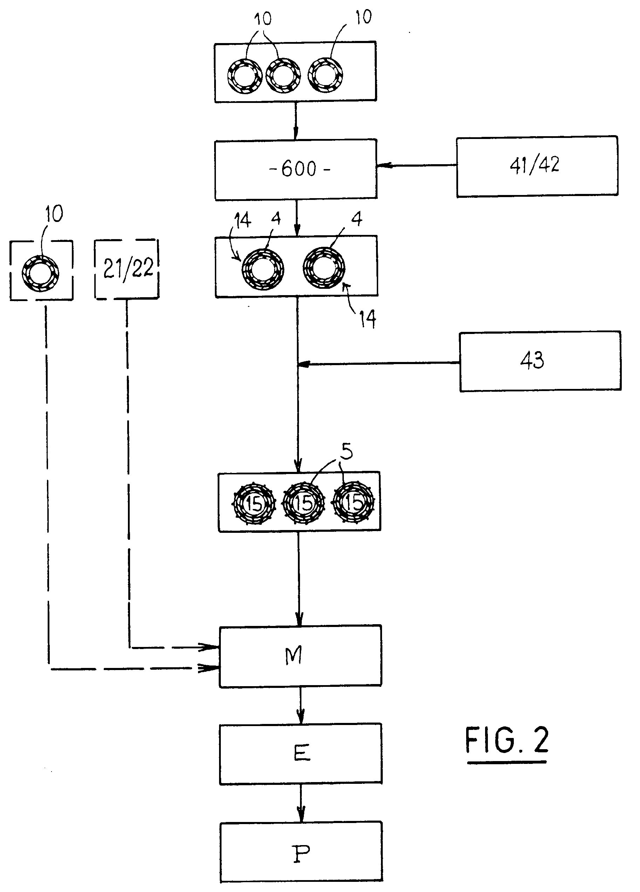

On peut, par exemple, pour cela utiliser la résine époxyde précédemment indiquée. après étuvage à 60°C pendant une heure dans une étuve E, la composition d'enduction a durci et il est possible de démouler la pièce de forme P faite à partir des sphérules selon l'invention. Ceci est illustré sur la Fig. 2 en trait discontinu.

Selon une autre variante de mise en oeuvre de ces sphérules, on utilise des sphérules creuses selon l'invention prêtes à l'emploi sans qu'il soit nécessaire de leur ajouter une colle ou analogue.

Pour ce faire, on part des sphérules creuses obtenues comme précédemment indiqué à la sortie de l'étuve 500 et on les revêt d'un fin film 4 d'une résine 41 dans un mélangeur 600 pour obtenir des granules 14. On se sert, par exemple, à titre de résine 41 de la résine époxyde et à titre de durcisseur 42 du durcisseur précédemment indiqués auxquels on ajoute une poudre anti-agglomérante 43 par exemple de polyéthylène désigné sous l'indication commerciale GOTALENE sur le catalogue du fabricant CONTINENTAL PARKER. On peut aussi utiliser toute autre poudre thermoplastique dont la nature et la granulométrie rendent incomplet le mouillage par la résine. Dans ce cas particulier, on utilise 20 g de résine par litre de sphérules à laquelle on ajoute 40 g de poudre par litre de sphérules. Le durcissement de cette résine est obtenu en 24 heures à la température ambiante. Les perles 15 ainsi préparées sont caractérisées par leur surface faite d'une couche 5 qui est constituée de grains de poudre ancrés dans la résine mais non recouverts par celle-ci.

De la sorte, on obtient un produit intermédiaire prêt à l'emploi qui est utilisable pour élaborer un matériau sans qu'il soit nécessaire de lui ajouter une autre résine. Les perles 15 ainsi obtenues peuvent être versées dans un moule M et après étuvage à 180°C pendant 30 min. dans une étuve E, le fluage de la poudre assure la liaison entre les sphérules. Ceci est illustré sur la Fig. 2 en trait continu.

Sur les figures du dessin, les épaisseurs de substratum 2, revêtement 3, film 4 et couche 5 ne sont pas représentées à l'échelle mais sont fortement exagérées afin de seulement faciliter la représentation et la compréhension de l'invention.

De ce qui précède, il est clair que les sphérules selon l'invention sont isotropes et ont une surface extérieure régulière et continue, sans la moindre solution de continuité, que cette surface soit lisse ou non. De plus, le sphérules ainsi obtenues peuvent être soumises à des opérations subséquentes par exemple par voie thermique, physique, chimique... pour leur conférer des propriétés et/ou aptitudes spéciales particulières par exemple de rigidité, de dureté, d'élasticité, de conductivité électrique, de rugosité...

On comprend tout l'intérêt de la technique selon l'invention qui permet d'obtenir un demi-produit intermédiaire constitué par les sphérules creuses en matériaux synthétiques qui peuvent servir, par exemple, à la confection d'amortisseurs d'énergie mécanique ou de panneaux d'absorption d'énergie sonore.

## Revendications

1. Procédé de fabrication de sphérules (10) creuses à base de matériaux synthétiques à l'aide de noyaux (11) consomptibles dégradables selon lequel au début on mélange des noyaux consomptibles dégradables avec une composition d'enduction (20) liquide comprenant un solvant (21) aqueux, une résine (22) hydrosoluble et un addenda (23) anti-agglomérant et éventuellement d'accrochage et à la fin on étuve (500) des boulettes (13) afin de durcir leur couche (3) de revêtement et de dégrader les noyaux (11) pour obtenir des sphérules creuses (10), caractérisé en ce qu'entre le début et la fin, de manière à obtenir des sphérules isotropes :
- on sèche (200) les noyaux (11) enduits pour obtenir de billes (12) libres avec une pellicule (2) de substratum;
- on mélange ces billes (12) d'abord avec une substance de revêtement (30) liquide comprenant un produit de base (31) synthétique et, éventuellement, un produit auxiliaire (32) puis avec un adjuvant (33) anti-agglutinant; et
- on sèche (400) les billes revêtues pour obtenir des boulettes (13) libres avec une couche (3) de revêtement.

2. Procédé selon la revendication 1, caractérisé en ce qu'on recycle les boulettes (13) pour augmenter l'épaisseur de la couche de revêtement (3).

3. Procédé selon la revendication 1 ou 2, caractérisé en ce que les noyaux (11) sont thermodégradables.

4. Procédé selon la revendication 3, caractérisé en ce que les noyaux (11) sont thermorétractables.

5. Procédé selon l'une quelconque des revendications 1 à 4, caractérisé en ce que les noyaux (11) sont en polystyrène expansé.

6. Procédé selon la revendication 1 à 5, caractérisé en ce que la composition d'enduction liquide (20) comprend comme solvant (21) de l'eau, comme résine hydrosoluble (22) une résine vinylique et comme addenda (23) une poudre inerte minérale.

7. Procédé selon l'une quelconque des revendications 1 à 6, caractérisé en ce que la substance de revêtement (30) comprend comme produit de base synthétique (31) une résine intimement mêlée de manière homogène à un durcisseur comme produit auxiliaire (32), ainsi que comme adjuvant anti-agglutinant (33) une poudre de polyamide (12).

8. Procédé selon la revendication 7, caractérisé en ce que la résine (31) est utilisée à raison de 40 g par litre de noyaux (11) et l'adjuvant (23) est utilisé à raison de 45 g par litre de noyaux (11).

9. Application des sphérules obtenues selon l'une des revendications 1 à 8, à la préparation de granules discrets, caractérisée en ce qu'on enrobe les sphérules (10) d'un film de résine avec durcisseur et d'une poudre anti-agglutinante et en ce qu'on durcit cette résine.

10. Application selon la revendication 9, caractérisée en ce que la résine est une résine époxyde et la poudre anti-agglutinante est une poudre de polyéthylène.

11. Application selon la revendication 10, caractérisée en ce que la résine est utilisée à raison de 20 g par litre de sphérules et la poudre à raison de 40 g par litre de sphérules.

## Patentansprüche

1. Verfahren zum Herstellen von hohlen Kugeln (10) auf Kunststoffbasis unter Verwendung von verbrauchbaren abbaubaren Kernen (11), bei dem zu Beginn die verbrauchbaren abbaubaren Kerne mit einer flüssigen Überzugszusammensetzung (20) gemischt werden, die ein wäßriges Lösungsmittel (21), ein wasserlösliches Harz (22) und ein Anti-Agglomerations- (23) und eventuell ein Haftzusatzstoff aufweist, bei dem am Ende die Kugeln (13) zum Härten ihrer Beschichtungsschicht (3) und zum Abbauen der Kerne (11) getrocknet (500) werden, um hohle Kugeln (10) zu erhalten, dadurch gekennzeichnet, daß zwischen dem Anfang und dem Ende zum Erhalten isotroper Kugeln die folgenden Schritte vorgesehen sind:
- Trocknen (200) der überzogenen Kerne (11) zum Erhalten freier Kugeln (12) mit einem Substratfilm (2);
- Mischen der Kugeln (12) zunächst mit einer flüssigen Beschichtungssubstanz (30), die ein synthetisches Basisprodukt (31) und eventuell ein Hilfsprodukt (32) aufweist, und anschließend mit einen Anti-Agglutinationszusatzstoff (33); und
- Trocknen (400) der beschichteten Kugeln, um freie Kugeln (13) mit einer Beschichtungsschicht (3) zu erhalten.

2. Verfahren nach Anspruch 1, dadurch gekennzeichnet, daß die Kugeln (13) zur Vergrößerung der Dicke der Beschichtungsschicht (3) rückgeführt werden.

3. Verfahren nach Anspruch 1 oder 2, dadurch gekennzeichnet, daß die Kerne (11) durch Wärme abbaubar sind.

4. Verfahren nach Anspruch 3, dadurch gekennzeichnet, daß die Kerne (11) durch Wärme schrumpfbar sind.

5. Verfahren nach einem der Ansprüche 1 bis 4, dadurch gekennzeichnet, daß die Kerne (11) aus expandiertem polystyrol bestehen.

6. Verfahren nach einem der Ansprüche 1 bis 5, dadurch gekennzeichnet, daß die flüssige Überzugszusammensetzung (20) als Lösungsmittel (21) Wasser, als wasserlösliches Harz (22) ein Vinylharz und als Zusatzstoff (23) ein inertes Mineralpulver aufweist.

7. Verfahren nach einem der Ansprüche 1 bis 6, dadurch gekennzeichnet, daß die Beschichtungssubstanz (30) als synthetisches Basisprodukt (31) ein intensiv mit einem als Hilfsstoff (32) verwendeten Härtemittel in homogener Weise gemischtes Harz sowie ein Polyamidpulver (12) als Anti-Agglutinations-Zuschlagstoff (33) aufweist.

8. Verfahren nach Anspruch 7, dadurch gekennzeichnet, daß das Harz (31) in einem Verhältnis von 40g pro Liter Kerne (11) und der Zusatzstoff (33) in einem Verhältnis von 45g pro Liter Kerne (11) verwendet wird.

9. Verwendung von Kugeln, die nach einem der Ansprüche 1 bis 8 erhalten wurden, bei der Herstellung diskreter Körner, dadurch gekennzeichnet, daß die Kugeln (10) mit einem ein Härtemittel aufweisenden Harzfilm und einem Anti-Agglutinationspulver ummantelt werden und dieses Harz gehärtet wird.

10. Verwendung nach Anspruch 9, dadurch gekennzeichnet, daß das Harz ein Epoxidharz und das Anti-Agglutinationspulver ein Polyethylenpulver ist.

11. Verwendung nach Anspruch 10, dadurch gekennzeichnet, daß das Harz in einem Verhältnis von 20g pro Liter Kugeln und das Pulver in einem Verhältnis von 40g pro Liter Kugeln verwendet wird.

## Claims

1. Method for manufacturing hollow spherules (10) based on synthetic materials with the aid of degradable consumable cores (11), according to which method degradable consumable cores are mixed, at the beginning, with a liquid coating composition (20) comprising an aqueous solvent (21), a water-soluble resin (22) and an anti-agglomerating, and possibly bonding, additive (23) and, at the end, ball structures (13) are stoved (500) so as to cure their covering layer (3) and degrade the cores (11) in order to obtain hollow spherules (10), characterized in that, between the beginning and the end, so as to obtain isotropic spherules:
- the coated cores (11) are dried (200) in order to obtain free balls (12) with a substrate skin (2);
- these balls (12) are firstly mixed with a liquid covering substance (30) comprising a synthetic base product (31) and, possibly, an auxiliary product (32), then with an anti-agglutinating adjuvant (33); and
- the covered balls are dried (400) in order to obtain free ball structures (13) with a covering layer (3).

2. Method according to Claim 1, characterized in that the ball structures (13) are recycled in order to increase the thickness of the covering layer (3).

3. Method according to Claim 1 or 2, characterized in that the cores (11) are thermodegradable.

4. Method according to Claim 3, characterized in that the cores (11) are heat-shrinkable.

5. Method according to any one of Claims 1 to 4, characterized in that the cores (11) are made of expanded polystyrene.

6. Method according to Claims 1 to 5, characterized in that the liquid coating composition (20) comprises, as solvent (21), water, as water-soluble resin (22), a vinyl resin and, as additive (23), an inorganic inert powder.

7. Method according to any one of Claims 1 to 6, charactarized in that the covering substance (30) comprises, as synthetic base product (31), a resin intimately mixed in a homogeneous manner with a hardener as the auxiliary product (32), as well as, as the anti-agglutinating adjuvant (33), a polyamide powder (12).

8. Method according to Claim 7, characterized in that the resin (31) is used in a proportion of 40 g per litre of cores (11) and the adjuvant (23) is used in a proportion of 45 g per litre of cores (11).

9. Application of the spherules, obtained according to one of Claims 1 to 8, in the production of discrete granules, characterized in that the spherules (10) are coated with a resin film having a hardener and with an anti-agglutinating powder, and in that this resin is cured.

10. Application according to Claim 9, characterized in that the resin is an epoxy resin and the anti-agglutinating powder is a polyethylene powder.

11. Application according to Claim 10, characterized in that the resin is used in a proportion of 20 g per litre of spherules and the powder is a proportion of 40 g per litre of spherules.
